# EUROPEAN PATENT APPLICATION

(11) **EP 1 191 426 A2**
(43) Date of publication of application: **27.03.2002**
(21) Application number: 01119996.5
(22) Date of filing: 18.08.2001
(51) Int. Cl.: G06F 1/30

(54) **Power failure managing method and power failure managing device**

(30) Priority: 21.08.2000 JP 2000250308
(71) Applicant: SANKYO SEIKI MFG. CO. LTD., Suwa-gun Nagano (JP)
(72) Inventor: Baba, Tsutomu, c/o Sankyo Seiki MFG. Co., Ltd., Nagano (JP)
(74) Representative: KOHLER SCHMID + PARTNER

(57) **Abstract**

A power failure managing device (9) comprises a backup power source (1), a CPU (2) that has a processing unit which detects a power failure and actuates said backup power source (1) upon detection, and a rewritable memory (3) that records the status of a system at the moment of said power failure. If said CPU (2) determines that said backup power source (1) is not properly functioning at the moment of said power failure, the information on said backup power source (1) is written in said memory (3).

## Description

### [Detailed Description of the Invention]

### [Field of the Invention]

The present invention relates to a power failure managing method and a power failure managing device for the moment of power failure. More specifically described, the present invention relates to a power failure managing method and a power failure managing device to record the information which will be used to recover the process that underwent the power failure.

### [Related Art]

A conventional system having a CPU (central processing unit), a memory device, etc. for data processing is normally equipped with a backup power source. When a power failure occurs, the CPU detects the power failure and immediately actuates the backup power source so that the power failure management is performed depending on the process the system was performing at the moment of the power failure, to facilitate the process recovery after the power failure.

In some card reading/writing systems (hereinafter denoted as a card reader), when a power failure occurs, the CPU detects the power failure and immediately actuates the backup power source so that the power failure management is performed depending on the process the system was performing at the moment of the power failure. For example, when the power went off during the writing of the data on a card, the rewriting is completed and the card is discharged. Or, if there is no attempt of removing the card, the card is taken into the card reader again for the purpose of security. After managing the power failure as described above, the information on the status of the card reader at the moment of the power failure, such as "the card does or does not exit inside the device", "an error has occurred during the card transportation", etc., is recorded in a flash memory. With this, when the power source comes back on, an appropriate recovery process is performed based on the information recorded in the flash memory.

### [Problems to be Solved]

However, even when the backup power is not sufficiently or not at all provided because the backup power source is not properly connected or functioning, a system such as a card reader makes an attempt to execute the power failure management [as the power goes off]. At that time, the power failure management cannot be completed in the short period of time from the detection of the power failure to the actual turn-off of the CPU. The card reader comes to a halt under the condition when the power failure management is incomplete. Therefore, the status of the card reader at the moment of the power failure cannot be recorded in the flash memory, and accordingly the process which underwent the power failure cannot be recovered when the power comes back on.

Even when the card reader is not performing any process at the moment of the power failure and the information on that status of the card reader is immediately input in the process of recording in the flash memory, the data in the entire block needs to be temporarily erased to record the change of the bit data "0" to "1" due to the characteristic of the flash memory. For this reason, the information on the status of the card reader at the moment of the power failure cannot be recorded in the flash memory in the short period of time from the detection of the power failure to the actual turn-off of the CPU. In worst case, if the CPU stops working while other data in the flash memory is being erased, the card reader itself will not properly function when the power comes back on.

An objective of the present invention is to provide a power failure managing method and a power failure managing device in which even if the backup power source is not properly functioning, the essential minimum information on the status of a system at the moment of the power failure can be provided to recover the process when the power comes back on.

### [Brief Description of the Drawing]

Fig. 1 is a block diagram of an example of a power failure managing device to which a power failure managing method of the present invention is applied.

Fig. 2 shows an example of an overwrite characteristic of a rewritable memory: Fig. 2 (A) shows the data before overwriting; Fig. 2 (B) shows the data that needs to be written; Fig. 2 (C) shows the data after overwriting.

Fig. 3 is a flowchart of an example of the steps in the power failure managing method of the present invention.

Fig. 4 shows an example in which the information on the backup power source is recorded in a rewritable memory: Fig. 4 (A) shows the initial data; Fig. 4 (B), (C), and (D) show the data that contain the information to overwrite the data of Fig. 4 (A).

### [Embodiments of the Invention]

A configuration of the present invention is described in detail hereinafter based on the embodiment illustrated in the drawings.

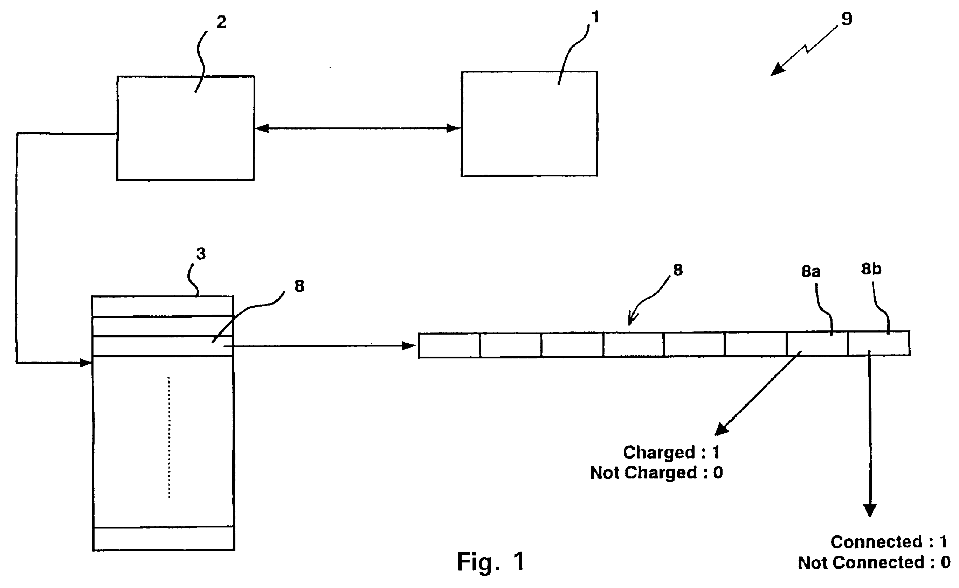

Figs. 1 through 4 illustrate an embodiment of a power failure managing device of a card reader to which a power failure managing method of the present invention is applied. A power failure managing device 9 comprises of a backup power source 1, a CPU 2 that has a process unit which detects a power failure and actuates the backup power source 1 upon detection of the power failure, and a rewritable memory 3 that records the status of the system at the moment of the power failure. When the CPU 2 determines that the backup power source 1 is not properly functioning at the moment of the power failure, the information on the backup power source 1 is written in the memory 3.

The CPU 2 executes a process monitoring task 4 that detects the power failure and actuates the backup power source 1 upon detection of the power failure. Also the CPU 2 constantly monitors the status of the backup power source 1 in the process monitoring task 4. For example, the CPU 2 detects the signals sent by the backup power source 1; depending on the signal, it determines whether or not the backup power source 1 is connected [to the system], whether or not the backup power source 1 is charged, whether or not other functions of the backup power source 1 are effectively functioning, etc.

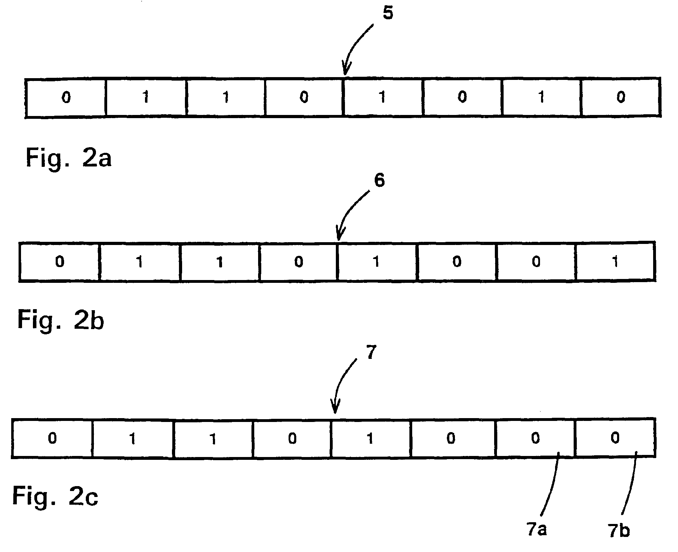

The memory 3 is a rewritable, nonvolatile memory. In this embodiment, a flash memory is used. The flash memory 3, in which the binary data composed of "1" and "0" is recorded, has the following characteristics. The rewriting of "1" with "0" can be accomplished by the overwriting; however, the rewriting of "0" with "1" is accomplished by first temporarily moving the data of one block (one byte consisting of 8 bits) aside to erase all the bits in the block and then rewriting the new data while writing back the moved data. For example, as illustrated in Fig. 2 (A), when the data 5 of one byte is overwritten with the data 6, the data becomes the data 7. In other words, although the bit 7a reflects the change from "1" to "0", the bit 7b does not reflect the change from "0" to "1".

Although a unit for a block differs depending on the product, the change of the bit data from "0" to "1" cannot be accomplished by a mere overwriting no matter how long the unit is, but requires to erase all the data in the entire block as a unit. Compared to the change of the bit from "1" to "0", more time is needed to change the bit from "0" to "1".

On the other hand, the change of the bit data from "1" to "0" can be simply accomplished by overwriting. Therefore, even if the backup power source 1 cannot be used, it is possible to quickly record the information on the backup power source 1 in the short period of time from the detection of the power failure to the actual turn-off of the CPU 2, depending on the composition of the bit data that express the information.

For example, the essential minimum information on the backup power source 1 that needs to be recorded in the flash memory 3 (hereinafter denoted as the backup power source information in this embodiment) is composed in the following manner.

In this embodiment, the backup power source information is set as "charged"/"not charged" and "connected"/"not connected". One byte in the flash memory 3 may be assigned as a region 8 for storing the backup power source information (hereinafter the region 8 being denoted as the power source information region 8). The backup power source information is recorded in predetermined two bits in the region 8. For example, the last two bits are used: the last bit is a connection confirming bit 8b and the second bit from the last is a charge confirming bit 8a. In other words, when the charge confirming bit 8a is "1", the backup power source is "charged"; when "0", the backup power source is "not charged". In the same manner, when the connection confirming bit 8b is "1", the backup power source is "connected"; when "0", it is "not connected". In the initial data of the power source information region 8, all bits are "1". It is programmed that the address of the power source information region 8 in the flash memory 3 is read into a registry in the CPU 2 when the system starts up, so that the CPU 2 can access the power source information region 8 when the power goes off.

According to the power failure managing device 9 configured as above, even when the backup power source 1 is not properly functioning, the essential minimum information on the status of the system at the moment of the power failure can be provided in the following manner when the power comes back on.

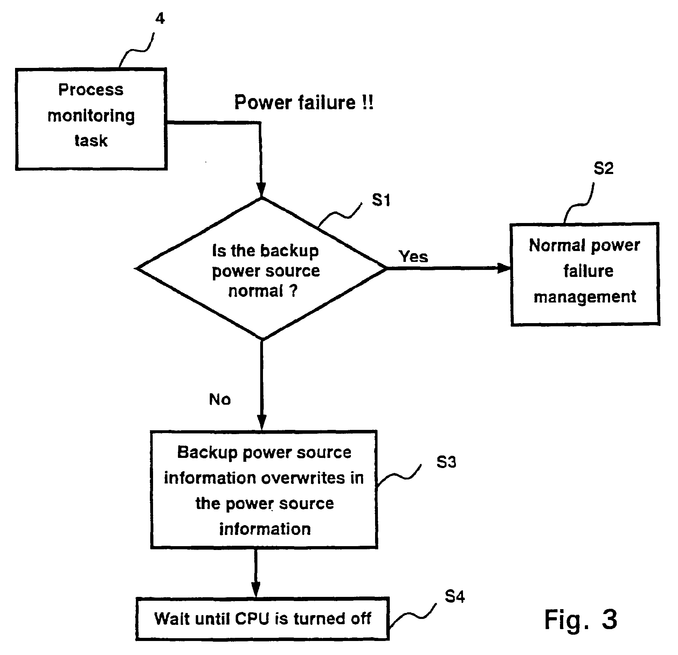

As the power failure is detected by the process monitoring task 4 in the CPU 2, the CPU 2 determines if the backup power source 1 is properly functioning (Step 1 (S1) in Fig. 3). The CPU 2 constantly monitors in the process monitoring task 4 the status of the backup power source1, such as whether or not the backup power source 1 connected, whether or not it is charged, etc., for a quick determination. Therefore, if the backup power source 1 is properly ready (Step 1; Yes), it is immediately actuated so that a predetermined, normal power failure management is performed (Step 2 (S2)), according to the process that underwent the power failure.

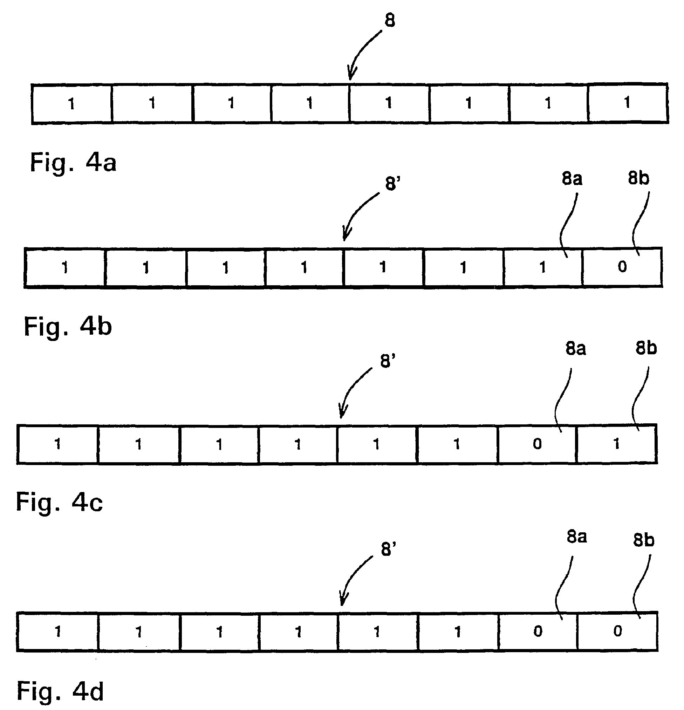

On the other hand, if the backup power source 1 has a problem, for example, if it is not connected or not charged (Step 1; No), the backup power source information that presents the status of the backup power source 1 overwrites the power source information region 8 (Step 3 (S3)). If the power failure occurs when the backup power source is not properly connected, the backup power source information 8' having "0" for the connection confirming bit 8b overwrites the initial data, as illustrated in Fig. 2 (B). If the power failure occurs when the backup power source 1 is not charged, the backup power source information 8' having "0" for the charge confirming bit 8a overwrites the initial data, as illustrated in Fig. 4 (C). If the power failure occurs when the backup power source 1 is neither properly connected nor charged, the backup power information 8' having "0" for both connection confirming bit 8b and charge confirming bit 8a overwrites the initial data.

In the initial data of the power source information region 8, all bits are "1" (Fig. 4 (A)). Therefore, to change "1" to "0", the backup power source information 8' simply overwrites. Consequently even when the backup power source 1 cannot be used, the backup power source information can be quickly recorded in the short period of time from the detection of the power failure to the actual turn-off of the CPU 2. Note that if the power failure occurs when the backup power source 1 is not charged and then the power comes back on, the power source information region 8 is changed as illustrated in Fig. 4 (C), in which the charge confirming bit 8a is "0. Suppose that another power failure occurs in succession. Then, if another power failure occurs when the backup power source 1 is not properly connected, the power source information region 8 is changed as illustrated in Fig. 4 (D) in which the connection confirming bit 8b is "0". At that time, the data, "not charged", recorded at the previous power failure cannot be changed back to the initial data, and therefore the problem at the second power failure cannot be specified between "not charged" and "not connected". However, it can be at least assumed that a normal power failure management could not be performed because the backup power source had a problem.

After the backup power source information is written in the power source information region 8, the CPU 2 does nothing until it is turned off (Step 4 (S4)).

With this, even if the backup power source 1 has a problem, the essential minimum information on the status of the system at the moment of the power failure can be obtained from the backup power source information, which is written in the power source information region 8, when the power comes back on. The steps that should be taken to recover the process can be known. If the backup power source 1 has a problem, the power failure management is not performed (Step 1; No); therefore, a card reader is prevented from halting due to an incomplete power failure management. Thus, the card reader will normally start when the power comes back on.

Note that the connection or the charge problem of the backup power source 1, which is indicated in the backup power source information, can be corrected in the managing process when the power comes back on. Consequently, when the power failure occurs next time, a normal power failure management is performed (Step 1; Yes, Step 2), in which all the bits in the power source information region 8 are rewritten with "1" to return to the initial status. At that time, since the backup power source 1 is properly functioning, sufficient time can be provided even for rewriting "0" to "1 ".

Note that although the above embodiment is an example of the preferred embodiments of the present invention, the present invention is not limited to this embodiment, but can be variously modified within the scope of the invention.

For example, the essential minimum information that should be recorded in the flash memory 3 is not limited to the example in the above embodiment, but may contain other information as well. As long as the information to be recorded can be written within 8 bits in the power source information region 8, the time required for processing is the same as that in the above embodiment. Each bit in the power source information region 8 may be assigned to write an item to be verified when the power comes back on after the power failure. In this case, eight items can be listed. For example, the information, such as whether or not the various functions of the backup power source 1 are valid, or the life expectancy or the current charge level of the backup power source 1, may be provided.

It is preferred that the size of the power source information region 8 be as small as it can so that the essential minimum information can be obtained in the short period of time. However, it is not necessarily limited to one byte. Depending on the processing ability of the CPU 2, two bits or more may be used for the power source information region 8.

Also, the memory 3 is not limited to flash memory. Another type of rewritable memory 3 that has the overwriting characteristic as mentioned above may be used. For example, an EEPROM (Electrically Erasable Programmable Read Only Memory), which is rewritable and nonvolatile, may be used.

Although in the above mentioned embodiment the power failure managing method of the present invention is applied in a card reader as a preferred example, it is not limited to this. The power failure managing method of the present invention can be applied to a power failure managing device, which can be used in a system that has memory devices, such as CPU and flash memory, as an information processing ability.

### [Effects of the Invention]

As understood from the above description, the power failure managing method of Claim 1 comprises a backup power source, a CPU that has a processing unit which detects the power failure and actuates the backup power source upon detection, and a rewritable memory that records the status of the system when the power went off. If the CPU determines that the backup power source is not properly functioning, the information on the backup power source is written in the memory. Therefore, even if the backup power source is not properly functioning, the essential minimum information on the status of the system at the moment of the power failure, which is written in the memory, can be provided when the power comes back on. With this, the steps that should be taken to recover the process can be known. Also, if the backup power source is not properly functioning, the power failure management is not performed so that the system does not stop with an incomplete power failure management and will normally start when the power comes back on.

Further, according to the power failure managing method of Claim 2, the information on the backup power source is simply recorded in the memory by overwriting. Therefore, the information can be quickly recorded in the memory because there is no need of erasing the data in the memory. Even if the backup power source cannot be used, it is possible to quickly record the information on the backup power source in the short period of time from the detection of power failure to the actual turn-off of the CPU.

According to the power failure managing method of Claim 3, the memory is a flash memory in which the change of the bit data from "1" to "0" can be immediately accomplished by overwriting. Taking advantage of this characteristic of the flash memory, even if the backup power source cannot be used, the information on the backup power source can be quickly recorded in the flash memory in the short period of time from the detection of power failure to the actual turn-off of the CPU.

According to the power failure managing method of Claim 4, the information on the backup power source is about either the charge status of the backup power source or about the connection status of the backup power source to the system, or about both. With this, the steps that should be taken to recover the process can be known and the problem with the connection or the electrical charge of the backup power source can be corrected.

The power failure managing device of Claim 5 comprises a backup power source, a CPU that has a processing unit which detects a power failure and actuates the backup power source upon detection, and an rewritable memory that records the status of a card reader at the moment of the power failure. When the CPU determines that the backup power source is not properly functioning at the moment of the power failure, the information on the backup power source is written in the memory. Therefore, even when the backup power source has a problem, the essential minimum information on the status of the system at the moment of the power failure can be provided from the information recorded in the memory to recover the process when the power comes back on. In this manner, the steps that should be taken to recover the process after the power failure can be known. When the backup power source has a problem, the power failure management is not performed so that the card reader does not stop with an incomplete power failure management and will properly start when the power is turned back on.

## Claims

1. A power failure managing method comprising:
a backup power source (1);
a CPU (2) that has a processing unit which detects a power failure and actuates said backup power source (1) upon detection; and
a rewritable memory (3) that records the status of a system at the moment of said power failure;
wherein if said CPU (2) determines that said backup power source (1) is not properly functioning at the moment of said power failure, the information on said backup power source (1) is written in said memory (3).

2. The power failure managing method as set forth in Claim 1 wherein said information on said backup power source (1) is written in said memory (3) only by overwriting.

3. The power failure managing method as set forth in Claim 1 wherein said memory (3) is a flash memory.

4. The power failure managing method as set forth in Claim 1 wherein said information on said backup power source (1) is about either the charge of said backup power source (1) or about the connection of said backup power source (1) with said system, or about both.

5. A power failure managing device (9) in a card reader, comprising:
a backup power source (1);
a CPU (2) that has a processing unit which detects a power failure and actuates said backup power source (1) upon detection; and
a rewritable memory (3) that records the status of said card reader at the moment of said power failure;
wherein if said CPU (2) determines that said backup power source (1) is not properly functioning at the moment of said power failure, the information on said backup power source (1) is written in said memory (3).
